(19) Europäisches Patentamt
European Patent Office
Office européen des brevets

(11) **EP 4 325 253 A1**

(12) **EUROPEAN PATENT APPLICATION**

(43) Date of publication:
**21.02.2024 Bulletin 2024/08**

(21) Application number: **22191121.7**

(22) Date of filing: **19.08.2022**

(51) International Patent Classification (IPC):
**G01T 1/17** *(2006.01)*          **G01T 1/20** *(2006.01)*

(52) Cooperative Patent Classification (CPC):
**G01T 1/20184; G01T 1/17**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventors:
• **SOLF, Torsten Jörn**
  **Eindhoven (NL)**
• **FRACH, Thomas**
  **Eindhoven (NL)**

(74) Representative: **Philips Intellectual Property & Standards**
**High Tech Campus 52**
**5656 AG Eindhoven (NL)**

(54) **PHOTON COUNTING DETECTOR AND PHOTON COUNTING METHOD**

(57)    The present invention relates to a photon counting detector and method. The detector comprises a scintillator (21) configured to convert incident gamma radiation into optical photons; a pixelated photodetector (22) configured to detect the flux of optical photons; and circuitry (23), which is configured to detect, per photodetector pixel, for a single clock cycle or set of subsequent clock cycles, if the detected flux represents a number of optical photons above a photon number threshold, and determine, per photodetector pixel, a photon count by accumulating the number of optical photons detected by the respective photodetector pixel during an integration period, wherein optical photons are ignored and not accumulated if the corresponding detected flux represents a number of optical photons below the photon number threshold.

Fig. 2

## Description

FIELD OF THE INVENTION

The present invention relates to a photon counting detector, a corresponding photon counting method and an imaging apparatus comprising a photon counting detector for detection of radiation, in particular gamma radiation and x-ray radiation.

BACKGROUND OF THE INVENTION

Photon counting has conventionally been implemented using photomultiplier tube (PMT) detectors, which comprise a light-sensitive photocathode and a set of "multiplier" anode terminals. The photocathode emits at least one electron responsive to impingement of a photon, and the electron(s) in turn strike successive anode terminals with each such event causing emission of a cascade of electrons, thus producing a multiplication effect that results in a measurable electrical pulse. A PMT is capable of high speed photon counting. PMT detectors have disadvantages including being relatively bulky discrete devices with large optical windows that operate at high voltage and are susceptible to failure due to the evacuated tube design and the high operational electrical voltage.

Silicon photomultiplier (SiPM) devices have been developed to overcome some of these disadvantages, and to provide photon-counting detectors that are readily integrated with silicon-based signal/data processing circuitry. In some embodiments, a SiPM device employs an avalanche photodiode as the light sensor. When biased above its down voltage, the avalanche diode goes into break down responsive to impingement of a single photon. Such a device is sometimes called a single photon avalanche diode (SPAD) detector. In a typical SPAD detector, the avalanche photodiode is reverse biased above its break down voltage and is in series with a quenching resistor. Impingement of a single photon causes the p-n junction to break down in a multiplicative (i.e., "avalanche") cascade of electrons that flow in the SPAD detector as a measurable electrical current. This current is quenched relatively quickly as voltage over the resistor due to the current flow lowers the reverse bias across the avalanche diode to a level below its break down voltage. Additionally or alternatively, an active quenching sub-circuit comprising (for example) one or more diodes, resistors, and/or transistors can provide more rapid quenching.

Digital silicon photomultipliers (dSiPMs) composed of single photon avalanche detector (SPAD) matrices are used as photon counting detectors (sometimes also called photon detectors) in high-performance PET/CT systems to detect single gamma quanta. Coupled to a time-of-flight capable scintillator, the fast trigger logic of the digital silicon photomultiplier enables time resolution in the range of 100-200 ps. Time resolution of these systems is limited, among others, by the time spread of the scintillation process. New detector concepts using prompt photons have been proposed, potentially offering improvement of time resolution significantly below 100 ps.

Indirect photon counting for spectral CT uses fast scintillators coupled to fast sampling with single photon detectors to detect and measure the energy of single X-ray gamma quanta. Relevant information for image reconstruction can be derived from an energy histogram (counting mode) of all detected gammas within the integration period (IP) as well continuous integration of the scintillator light (like standard CT systems).

Typically, CT image quality is hampered in standard integration mode by several artefacts, namely scintillator afterglow as well as sensor dark current. The dark current is normally subtracted from the signal, but this introduces a noise figure proportional to the square root of the current. Additionally, temperature changes modify dark currents in silicon detectors and especially temperature drifts can lead to incorrect dark current suppression.

SUMMARY OF THE INVENTION

It is an object of the present invention to suppress or at least reduce the noise caused by different noise sources.

In a first aspect of the present invention a photon counting detector is presented comprising:

  a scintillator configured to convert incident gamma radiation into optical photons;
  a pixelated photodetector configured to detect the flux of optical photons; and
  circuitry configured to

  - detect, per photodetector pixel, for a single clock cycle or set of subsequent clock cycles, if the detected flux represents a number of optical photons above (or below) a photon number threshold, and
  - determine, per photodetector pixel, a photon count by accumulating the number of optical photons detected by the respective photodetector pixel during an integration period, wherein optical photons are ignored and not accumulated if the corresponding detected flux represents a number of optical photons below the photon number threshold.

In a further aspect of the present invention a corresponding photon counting method is presented.

In a still further aspect of the present invention an imaging apparatus comprising a photon counting detector as disclosed herein is presented.

Preferred embodiments of the invention are defined in the dependent claims.

The present invention is based on the idea to detect single photons (or a small number of photons, such as a number below ten, preferably below five) in a single clock cycle (or a set of a small number of subsequent clock cycles, such as a number below ten, preferably below five) and to ignore such single photons (or small number of photons) in the integration of detected photons during an integration period. These single photon counts (or small numbers of photon counts) are preferably clipped digitally. In this way, noise in the accumulated photon count per integration period caused by noise sources like dark current, afterglow and crosstalk, which are typically characterized by single photon counts, can thus be substantially reduce or even eliminated.

The integration period is typically much longer than a clock cycle and spans over a plurality of clock cycles. The clock cycle is typically in the range of a few ns and could e.g. be in the range from 1 to 100 ns. The integration period is typically in the range of 100 $\mu$s and could e.g. range from 50 $\mu$s to 500 $\mu$s.

As mentioned above, single photons or a small number of photons are preferably detected. Accordingly, the circuitry may be configured to use a predetermined photon number threshold, which is a single digit number, in particular a number smaller than five, preferably one. This photon number threshold is used in the detection that preferably detects if the number of photons is above or below the threshold. If it is above it is counted, if it is below, it is not counted. If it is equal to the threshold it depends on the implementation if it is counted or not.

It is a matter of implementation if the detection is configured to detect if a detected flux represents a number of optical photons is above the photon number threshold or if it detects if a detected flux represents a number of optical photons is above the photon number threshold.

In an embodiment the circuitry is configured to use an adaptable photon number threshold and to adapt the photon number threshold. For instance, if it is noted that noise is insufficiently suppressed, the photon number threshold may be increased so that larger numbers of photons detected in a clock cycle are ignored. The noise can e.g. be detected by integrating without radiation (e.g. X-ray) switched on to quantify the noise figure precisely (e.g. mean and standard deviation, etc.). If it is noted that too many photon counts are - erroneously - ignored so that the final photon count in an integration period may be incorrect, the photon number threshold may be decreased. Signal clipping can be detected and quantified in test runs with radiation (e.g. X-ray) switched on and by measuring different programmable thresholds. The resulting histograms quantify potential clipping (e.g. higher thresholds will lead to higher clipping).

In another alternative or additional embodiment, the circuitry is configured to use an adaptable clock frequency which integrates the optical flux per photodetector pixel and to adapt the clock frequency. Thus, there are two options to adapt the effective photon flux threshold since the optical flux is energy per time interval (dE/dt) for a given pixel area, namely, to adapt the photon number threshold and/or the clock frequency. For instance, a photon number threshold of E>2 for 100 MHz gives similar effective thresholds for the flux as E>1 for 200 MHz. Statistically, the effect is different due to Poisson noise, but the expectation (mean) values realize the same threshold for the minimum flux.

In another embodiment the circuitry is configured to detect, per photodetector pixel, for a single clock cycle, in particular for every single clock cycle, if the detected flux represents a number of optical photons above the photon number threshold. The detection per clock cycle, in particular for every clock cycle, improves the accuracy of the detection and thus the noise suppression.

The circuitry may further be configured to detect if the detected flux represents a number of optical photons above a photon number threshold by detecting if the energy detected for the photodetector pixel during the single clock cycle or the set of subsequent clock cycles is above an energy threshold. This embodiment is rather simple to implement but effectively enable the desired detection. Hereby, a predetermined energy threshold or an adaptable energy threshold may be used.

The pixelated photodetector may particularly be implemented as a silicon photomultiplier, SiPM, detector, wherein each detector pixel comprises an array of silicon avalanche photo diodes, SPADs. The SPADs are preferably operated in Geiger mode above the breakdown and connected individually to a digital output. These sensors can detect single optical photons as well as single electron-hole pairs originating from dark current. As the dark count rate in the silicon detectors normally double every 8 Kelvin temperature increase, the requirements to temperature stability can lead to a strong cost increase of the system design. By use of the present invention the effective temperature gradient can be reduced substantially.

In such an embodiment the present invention makes use of the fact that every optical photon can be detected individually by such a SPAD matrix. The SPAD matrix is summed synchronously with a suitable reference frequency of typically a few hundred megahertz leading to a very low expectation value (<<1) in quiescent mode. Afterglow of the scintillator as well as dark counts from the SPAD matrix are characterized by single photon counts. An embodiment of the present invention clips these single photon counts digitally by summing the SAPD matrix energy after every clock cycle and by clipping single photon counts before adding them into the integration counter.

Thus, in an embodiment the circuitry is configured to detect if the detected flux represents a number of optical photons above a photon number threshold by detecting if the number of SPADs that are in breakdown (i.e. have been fired) during the single clock cycle or the set of subsequent clock cycles is above a SPAD threshold. Hereby, a predetermined SPAD threshold or an adaptable SPAD threshold may be used.

The claimed imaging apparatus that comprises a photon counting detector as disclosed herein may e.g. be a PET apparatus, a CT apparatus, a SPECT apparatus, a Time-of-Flight (TOF) PET apparatus, or a Compton camera.

BRIEF DESCRIPTION OF THE DRAWINGS

These and other aspects of the invention will be apparent from and elucidated with reference to the embodiment(s) described hereinafter. In the following drawings

Fig. 1 shows a schematic diagram illustrating the origin of detected photons.
Fig. 2 shows a schematic diagram of an embodiment of a photon counting detector according to the present invention.
Fig. 3 shows a schematic diagram of an embodiment of an optical photon detector and an integrator for determining the optical photon count.
Fig. 4 shows a schematic diagram of another embodiment of an optical photon detector and an integrator for determining the optical photon count.
Fig. 5 shows diagrams of different signals to illustrate the effect of the present invention.

DETAILED DESCRIPTION OF EMBODIMENTS

Before details of the present invention will be explained, several signal and noise sources are first described for a better understanding. Generally, sensor signals can originate from several sources:

- Scintillation photons from the same pixel by X-ray absorption;
- Scintillation photons from neighboring pixels by pixel crosstalk;
- Direct or indirect SPAD crosstalk (in case the detector pixels are implemented each by a SPAD matrix of multiple SPADs);
- Afterglow of the scintillator; and
- Dark count by the SPAD current.

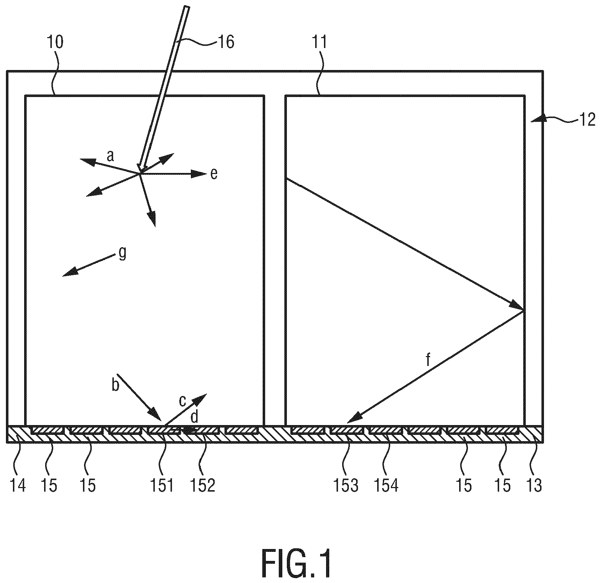

Fig. 1 shows a schematic diagram illustrating the origin of detected photons. Fig. 1 particularly shows an arrangement of two scintillator pixels 10, 11 of a larger scintillator comprising a plurality of scintillator pixels that convert incident gamma radiation into optical photons. The scintillator pixels 10, 11 are encapsulated and separated by a reflector material 12 and mounted to a pixelated (silicon) photodetector 13 with SPAD arrays 14 (each array comprising a plurality of SPADs 15) matching the pixel pitch and detecting the flux of optical photons.

The optical photons which are detected by the photodetector 13 based on the SPAD matrixes can be of different origins: Incident gamma radiation 16 (e.g. X-ray photons) that are absorbed by the scintillator generate a shower of optical photons (a) according to their decay characteristic (with decay times in the range of e.g. 5 ns-50 ns). They spread isotropically in the material, get reflected by the encapsulating reflector or by diffuse centers within the scintillator. Many photons reach optically sensitive SPADs, as an example photon (b) gets detected by SPAD 151, which breaks down and generates a digital pulse. During the breakdown, optical photons are generated by photo emission in the avalanche region which can leave the SPAD (c) generating indirect optical crosstalk or trigger neighboring SPAD 152 generating direct optical crosstalk like photon (d). This process is quite fast and can happen within 10-100 ps (picoseconds), leading to time correlated SPAD breakdown. The probability is described by the crosstalk probability which depends on the bias voltage and the SPAD capacity. Some of the optical photons [e] are not reflected from the separating reflector material 12 and can reach neighboring pixels where these photons (f) are detected by SPAD 153. Additionally, the scintillator can emit optical photons spontaneously from previously absorbed gamma quanta (or light exposure). The afterglow originates from de-trapping of photons like photon (g), which can lead to single SPAD detection due to its uncorrelated nature.

As mentioned above, a signal can also be generated by the dark current in the SPAD, and is therefore not generated by optical photons, but which could still generate optical cell crosstalk.

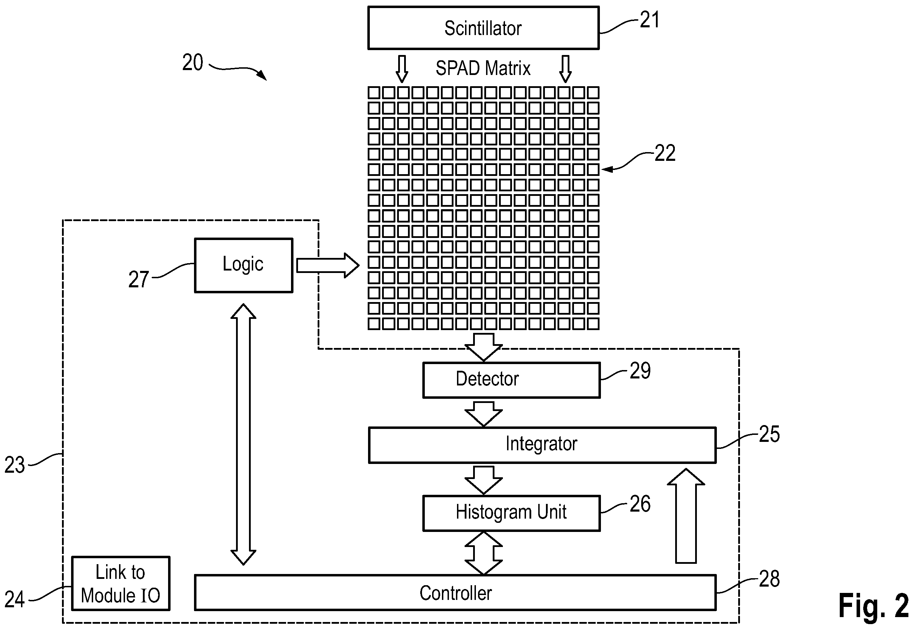

Fig. 2 shows a schematic diagram of an embodiment of a photon counting detector 20 according to the present invention. The detector 20 generally comprises a scintillator 21 configured to convert incident gamma radiation into optical photons, a pixelated photodetector (represented by a SPAD matrix 22) configured to detect the flux of optical photons, and circuitry 23 (or corresponding units) configured to further process / evaluate the detected optical photons.

In more detail, Fig. 2 shows a single pixel of a sensor die including - in this embodiment - a SPAD matrix 22, on one hand, and a link 24 to an IO (input / output) module on the other hand. The IO module is e.g. provided for input / output of data, clock, integration period control, commands, power, etc. The scintillation light of from gamma rays is collected by the SPAD matrix 22. A programmable photon accumulator 25 (also called integrator) computes the sum of each acquired pulse (in particular a programmable number of samples) and stores it in a histogram unit 26 that uses suitable (optionally programmable) thresholds. Therefore, the state of the SPADs may be read out synchronously to a reference clock and added by the accumulator 25. A programmable number of samples are added to generate an energy estimate of the absorbed radiation quanta and stored in the energy histogram. In parallel, true integration mode may also be provided (not shown Fig. 2), which is often used in CT detection.

A controller 28 (or processor) takes care of several aspects. It may control the accumulator 25, the histogram unit 26 and a logic circuit 27 (e.g. a pixel logic for addressing or controlling the pixels of the SPAD matrix 22). Further, at the start of an integration period, which also indicates the end of the previous integration period, the histogram data are buffered and sent downstream into a downstream datalink 24 towards the IO module, followed by a reset to initialize the histogram data for the next integration period.

During the integration period, histogram counts increase until the end of the integration period, which may be controllable or set via a command interface e.g. of the IO module, which may be controlled by the acquisition system. The integration period is typically in the range of 100 $\mu$s and could e.g. range from 50 $\mu$s to 500 $\mu$s.

According to the present invention it is detected (e.g. by an optical photon detector 29 or detection circuitry), per photodetector pixel if the detected flux represents a number of optical photons above (or below) a photon number threshold. This may preferably be done for each single clock cycle or for each set of (a low number (e.g. smaller than 50 or smaller than 10) of) subsequent clock cycles. Generally, a clock cycle covers a much smaller time period than the integration period and is typically in the range of few ns and could e.g. be in the range from 1 to 100 ns.

The photon number threshold may be adaptable or set / predefined in advance and represents the number of photons that shall be detected. For instance, the photon number threshold may be set to two to detect single photons. Generally, the photon number threshold may be a small number, e.g. smaller than ten or smaller than five, to detect photons that represent noise and thus may distort the true photon count determined by the integrator 25.

The integrator 25 then determines, as explained above, per photodetector pixel, a photon count by accumulating the number of optical photons detected by the respective photodetector pixel during an integration period. However, according to the present invention, optical photons are ignored and not accumulated if the corresponding detected flux represents a number of optical photons below the photon number threshold. For instance, single optical photons are, if detected, ignored by the integrator 25, and only optical photons that are above (and, optionally and depending on the implementation, equal to) the photon number threshold are accumulated to result in the photon count during the integration period. Thus, optical photons representing noise are ignored and can thus not distort the true photon count.

In an embodiment that present invention makes use of the fact that every optical photon is detected individually by a matrix of single photon counters (SPAD matrix, as shown in Fig. 2). The SPAD matrix is summed synchronously with a suitable reference frequency of a few hundred MHz leading to a very low expectation value (<<1) in quiescent mode. Instead, afterglow of the scintillator as well as dark counts from the SPAD matrix are characterized by single photon counts. According to an embodiment of the present invention these single photon counts are clipped digitally. This can be realized by summing the SAPD matrix energy $E_n$ after every clock cycle and by clipping single photon counts before adding them into the integration counter $E_{sum}$ (which integrates over the integration period):

$$E'_{sum} = E_{sum} + E_n \ (\text{if } E_n > 1).$$

The detection can also be programmed with different photon number thresholds larger than one, and the detection may be disabled during operation or at certain times during the integration.

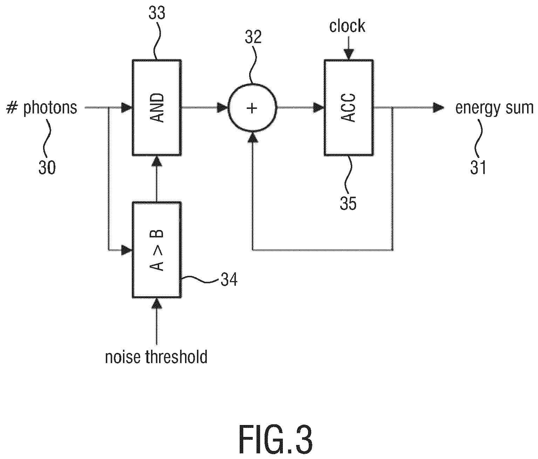

A schematic diagram of an exemplary implementation of the detection by the optical photon detector 29 and the integration by the integrator 25 is shown in Fig. 3. The diagram shows the principle of noise suppression for true integration based on single optical photon counting: The real-time sampled energy sum of the SPAD matrix with a suitable clock frequency (e.g. in the range of 50 MHz to 150 MHz), i.e. the number of photos detected by the SPAD matrix in one clock cycle, is used as input 30. The cumulative energy sum 31 is computed by consecutive and conditional adding of the samples by an adder 32. The integral is reset before integration start and controlled by an integration period (IP) signal (not shown). The condition (checked by the AND block 33) for adding requires that the energy sample fulfills A>B as checked in check unit 34, where A is the energy sample for every clock cycle and B is the threshold (called "noise threshold" in this embodiment, which represents the photon number threshold). In an example the setting of B=1 is used (i.e., single photons can be detected), but this threshold may be programmable so that other settings like B=0 (optical photon detection disabled) or B=2 or 3 or higher are possible. The accumulator (ACC) unit 35, which may include a register or other storage means, is configured to store the counting result.

As additional benefit of the present invention, power consumption of the adder 32 can be reduced by using the integral energy sum. A stopping condition for the adder could be a condition A>B, which indicates that enough statistical data is acquired in the integration period output. The readout and integration of gamma quanta generally requires a high amount of power. For very high gamma flux it is not necessary to use the full exposure time given by the integration period.

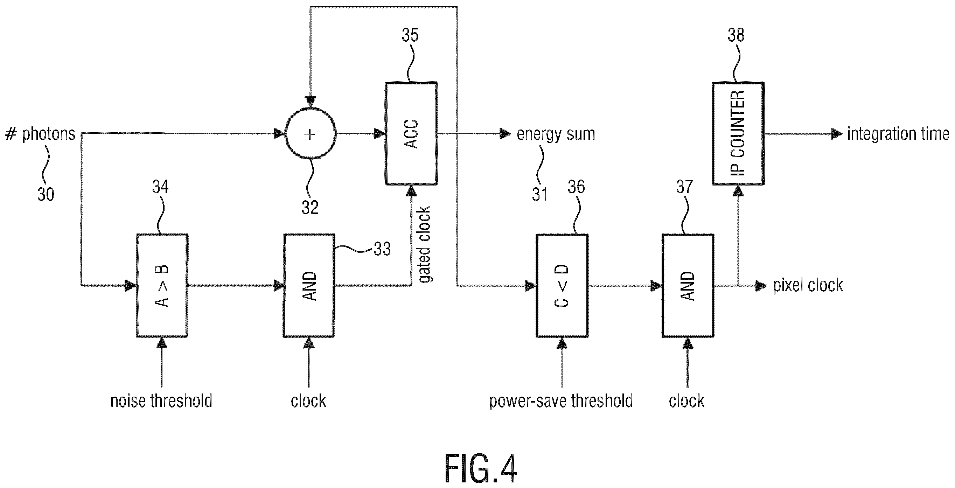

Fig. 4 shows another exemplary implementation of the detection by the optical photon detector 29 and the integration by the integrator 25. According to this embodiment conditional adding is used for energy integration in the accumulator 35 using a gated clock for further power reduction of the accumulator 35 for accumulating the energy sum 31. The gated clock is generated by the adder 33 from the clock signal based on the result of the check in the check unit 34.

According to a further embodiment shown in Fig. 4 as well, an additional block may be provided to further process the energy sum 31 (the same block may be used in the embodiment shown in Fig. 3 as well). According to this embodiment, the output of the accumulator may be used to stop the pixel clock and the SPAD recharge for power saving if the value C exceeds a given programmable / adaptable (power-save) threshold D as checked by a check unit 36. If the result is positive (i.e. C exceeds D), the output of the AND block 37 is zero so that the accumulation in the counter unit 38 that counts the detected photons over the integration period is stopped.

For instance, per photodetector pixel, a stop timing may be controlled, at which one or more functions of the photodetector pixel are stopped (in this case the accumulation in the final photon count). A first photon count may then be determined by accumulating the number of optical photons detected by the SPADs of the respective photodetector pixel from the start of an integration period up to the stop timing. A second photon count may then be estimated based on the first photon count and the stop timing, wherein the second photon count represents an estimate of the photon count for the total integration period. The benefit in power consumption can be significant.

Thus, according to this embodiment the photon counting can be stopped when a stop condition is reached. For instance, the recharge of a pixel can be stopped by a programmable recharge control logic conditionally. The integration time from start of the integration period up to the individual stop (e.g. by disabling the recharge) may be stored by an integrated counter or given by an external signal, providing the actual and precise integration time (in ns range), to compute radiation rate estimates precisely. This embodiment acts like a pixel-based exposure control, preventing any over-exposure at any time to provide useful acquisition data for image reconstruction.

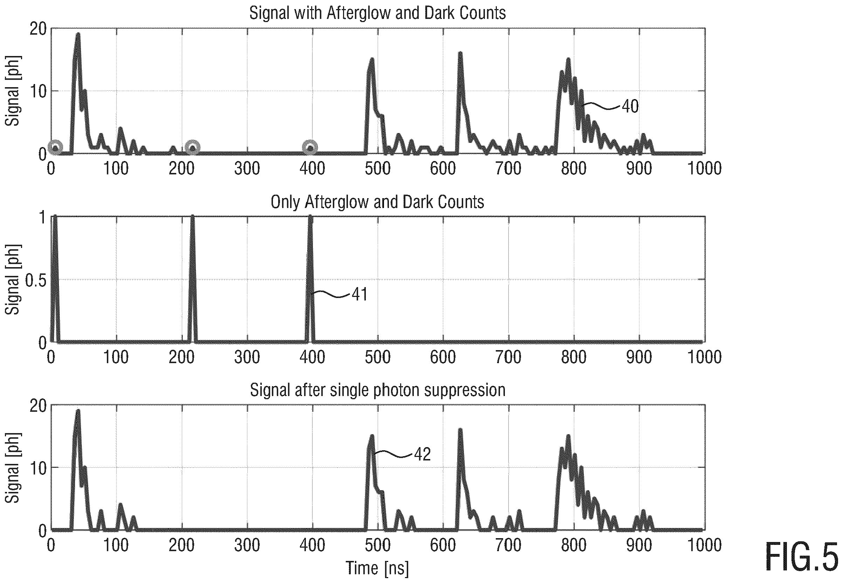

According to embodiments of the present invention counting and integration mode may use synchronous energy sums of the SPAD matrix. An example of pulse trains from gamma quanta, as well as dark counts or after-pulses are illustrated in Fig. 5 showing diagrams of different signals to illustrate the effect of the present invention. The first plot 40 shows a signal having different scintillation pulses with dark count noise, after pulsing noise and afterglow noise from the scintillator (the noise contributions are indicated by circles). The second plot 41 indicates the noise contribution to the signal 40 only. The third plot 42 shows the cleaned pulse train obtained by clipping single optical photon events as proposed according to the present invention. This example shows that single photon events like afterglow, dark count noise and after-pulsing can be removed successfully from the samples.

In integration mode, single photons from the exponential tail of the scintillator decay are removed before integration, leading to a slight reduction of the signal. For suitable scintillators and readout frequencies this may lead to a signal reduction (e.g. of up to 10 %). However, the advantage of a significantly reduced noise figure finally improves the S/N especially at low count rates.

Noise like afterglow may be suppressed by at least one order of magnitude. This is important as a low count rate phase follows timely after a high exposure rate and here suppression of afterglow is very efficient. The dark count rate (DCR) is normally characterized by single events. In case of optical crosstalk, the energy estimate can lead to two (or more) counts simultaneously which cannot be suppressed if the threshold is one. The reduction in dark count noise is therefore linked directly to the crosstalk value: An optical crosstalk probability of e.g. 10 % may limit the DCR suppression to a factor of ten (which is still a very good suppression). This mechanism may also limit the afterglow reduction to a factor if ten (in case of e.g. 10 % crosstalk), because the SPAD breaks down always with the same crosstalk probability.

After-pulsing is correlated to the recharge timing of the SPADs. The recharge timing is normally long enough to prevent short term after-pulsing (within the scintillator decay time). Nevertheless, long term after-pulsing can be suppressed with a similar efficiency like the dark count rate. An important benefit of the present invention is the suppression of scintillator afterglow which is characterized by single optical photon events within a pixel.

The reflector between adjacent pixels in the scintillator matrix are normally not 100% light tight. In addition, the optical glue to attach the scintillator array to the sensor array as well as optical layers on the sensor like silicon oxide or silicon nitride increase the optical crosstalk between adjacent pixels. Depending on the geometries and materials, the optical crosstalk in CT applications is normally in the range of less than 10 % or even less than 5 %. In true integration mode the crosstalk is integrated. Depending on the mounting accuracy, this can lead to non-isotropic contributions which are difficult to correct. The present invention offers suppression of this crosstalk due to its clipping feature of single (or a low number of) optical photons within a clock cycle (or a low number of consecutive clock cycles).

As an example, if 60 optical photons (ph) are detected by a 60 keV gamma absorption (assuming for simplicity of the explanation here that 1 ph is detected for 1 keV gamma absorbed), then the expectation value for a 2% crosstalk is 1.2 ph integral value (in this example above 0.02*60). Assuming an energy readout every 5 ns for a scintillator with 20 ns effective decay time, the expectation value is below 0.3 ph at scintillation start (worst case). Due to the Poisson distribution, single photon energies would be recorded, but with the clipping feature of the present invention, the probability is reduced by a factor of 8 with a remaining crosstalk of 0.25 %.

In summary, by use of the present invention it may be achieved to suppress or at least significantly reduce dark count noise (in particular of a SPAD matrix), after-pulsing (in particular of a SPAD matrix), afterglow of the scintillator and optical crosstalk to adjacent pixels. All these effects are beneficial for the image quality, e.g. in CT imaging. The quantitative benefit depends directly on the crosstalk (e.g. SPAD crosstalk). For sensor designs with integral of 10 % SPAD crosstalk, the noise originating from crosstalk can be reduced by a factor in the range of ten. For smaller SPAD crosstalk, the benefit increases inversely to the level of crosstalk (e.g. 5 % crosstalk could lead to a suppression of a factor of twenty).

Thus, according to the present invention a solution is prevented by which these noise sources can largely be suppressed by at least one order of magnitude. This improves temperature stability and reduces artefacts originating from scintillator afterglow as well as crosstalk very efficiently.

The present invention may e.g. be used in scintillator based photon-counting CT, digital PET, digital SPECT, and high-energy physics detectors.

Further preferred modifications of the embodiment illustrated in Fig. 4 may be configured as follows:

    a. Photon counting detector,
    wherein the circuitry is configured to

- apply, per SPAD or groups of SPADs, a recharge signal to the respective one or more SPADs for recharging after a breakdown in response to impingement of an optical photon, and
- control, per photodetector pixel, as stop timing a recharge stop timing at which the application of a recharge signal to the respective one or more SPADs is stopped.

    b. Photon counting detector,
    wherein the circuitry is configured to estimate the second photon count based on the first photon count and the time ratio of a non-measurement time period from the stop timing to the end of the integration period divided by a measurement time period from the start of the integration period to the stop timing.

    c. Photon counting detector,
    wherein the circuitry is configured to estimate the second photon count by adding to the first photon count the product of the first photon count with the time ratio.

    d. Photon counting detector,

        wherein the circuitry comprises a time counter configured to count the time period from the start of the integration period up to the stop timing and wherein the circuitry is configured to use this time period for estimating the second photon count.

    e. Photon counting detector,

        wherein the circuitry comprises a system counter configured to oversample the integration period and to count the number of sub-sampling periods from the start of the integration period up to the stop timing and wherein the circuitry is configured to use this time period for estimating the second photon count.

    f. Photon counting detector,
    wherein the circuitry is configured to predict the position of an examination object with respect to the photon counting detector in the subsequent integration period and to control the stop timing based on the predicted position.

    g. Photon counting detector,
    wherein the circuitry is configured to control the stop timing based on the predicted position by stopping operation and/or recharging of the SPADs of photodetector pixels that are predicted not to be covered by parts of the examination object earlier compared to SPADs of photodetector pixels that are predicted to be covered by parts of the examination object.

    h. Photon counting detector,
    wherein the circuitry is configured to predict the position of an examination object with respect to the photon counting detector in the subsequent integration period based on a scout scan or image information.

    i. Photon counting detector,
    wherein the circuitry is configured to control, per photodetector pixel, the stop timing based on a stop condition.

    j. Photon counting detector,
    wherein the circuitry is configured to control, per photodetector pixel, the stop timing based on the detection that one or more energy bins of the respective photodetector pixel have exceeded a respective count threshold and/or that the number of optical photons of the respective photodetector pixel has exceeded a respective photon threshold.

    k. Photon counting detector,
    wherein the circuitry is further configured to integrate the optical flux and determine an integration value up to the stop timing.

    l. Photon counting detector,

        wherein each pixel of the pixelated photodetector comprises a plurality of cells,
        wherein each cell comprises:

- a SPAD reverse-biased above a breakdown voltage of the SPAD;
- trigger logic connected to the SPAD and configured to output a trigger signal indicating whether the SPAD is in breakdown; and

- a conditional recharge circuit configured to recharge the SPAD conditional upon both (i) the recharge circuit applying the recharge signal to the cell and (ii) the trigger signal output by the trigger logic of the cell indicating the SPAD of the cell is in breakdown.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

The elements of the disclosed devices, apparatus and systems may be implemented by corresponding hardware and/or software elements, for instance appropriate circuits or circuitry. A circuit is a structural assemblage of electronic components including conventional circuit elements, integrated circuits including application specific integrated circuits, standard integrated circuits, application specific standard products, and field programmable gate arrays. Further, a circuit includes central processing units, graphics processing units, and microprocessors which are programmed or configured according to software code. A circuit does not include pure software, although a circuit includes the above-described hardware executing software. A circuit or circuitry may be implemented by a single device or unit or multiple devices or units, or chipset(s), or processor(s).

Any reference signs in the claims should not be construed as limiting the scope.

**Claims**

1. Photon counting detector comprising:

  a scintillator (21) configured to convert incident gamma radiation into optical photons;
  a pixelated photodetector (22) configured to detect the flux of optical photons; and
  circuitry (23) configured to

    - detect, per photodetector pixel, for a single clock cycle or set of subsequent clock cycles, if the detected flux represents a number of optical photons above a photon number threshold, and
    - determine, per photodetector pixel, a photon count by accumulating the number of optical photons detected by the respective photodetector pixel during an integration period, wherein optical photons are ignored and not accumulated if the corresponding detected flux represents a number of optical photons below the photon number threshold.

2. Photon counting detector as claimed in claim 1, wherein the circuitry is configured to use a predetermined photon number threshold, which is a single digit number, in particular a number smaller than five, preferably one.

3. Photon counting detector as claimed in claim 1, wherein the circuitry is configured to use an adaptable photon number threshold and to adapt the photon number threshold.

4. Photon counting detector as claimed in any one of the preceding claims, wherein the circuitry is configured to use an adaptable clock frequency which integrates the optical flux per photodetector pixel and to adapt the clock frequency.

5. Photon counting detector as claimed in any one of the preceding claims, wherein the circuitry is configured to detect, per photodetector pixel, for a single clock cycle, in particular for every single clock cycle, if the detected flux represents a number of optical photons above the photon number threshold.

6. Photon counting detector as claimed in any one of the preceding claims, wherein the circuitry is configured to detect if the detected flux represents a number of optical photons above a photon number threshold by detecting if the energy detected for the photodetector pixel during the single clock cycle or the set of subsequent clock cycles is above an energy threshold.

7. Photon counting detector as claimed in claim 6, wherein the circuitry is configured to use a predetermined energy threshold or an adaptable energy threshold.

8. Photon counting detector as claimed in any one of the preceding claims, wherein the pixelated photodetector (22) is a silicon photomultiplier, SiPM, detector, wherein each detector pixel comprises an array of silicon avalanche photo diodes, SPADs.

9. Photon counting detector as claimed in claim 8, wherein the circuitry is configured to detect if the detected flux represents a number of optical photons above a photon number threshold by detecting if the number of SPADs in breakdown during the single clock cycle or the set of subsequent clock cycles is above a SPAD threshold.

10. Photon counting detector as claimed in claim 9, wherein the circuitry is configured to use a predetermined SPAD threshold or an adaptable SPAD threshold.

11. Imaging apparatus comprising a photon counting detector (20) as claimed in any one of the preceding claims.

12. Photon counting method comprising:

   - detecting, per photodetector pixel of a pixelated photodetector (22) that is configured to detect a flux of optical photons converted by a scintillator (21) from incident gamma, for a single clock cycle or set of subsequent clock cycles, if the detected flux represents a number of optical photons above a photon number threshold, and
   - determining, per photodetector pixel, a photon count by accumulating the number of optical photons detected by the respective photodetector pixel during an integration period, wherein optical photons are ignored and not accumulated if the corresponding detected flux represents a number of optical photons below the photon number threshold.

FIG.1

Fig. 2

EP 4 325 253 A1

FIG.3

FIG.4

EP 4 325 253 A1

Signal with Afterglow and Dark Counts

Only Afterglow and Dark Counts

Signal after single photon suppression

Time [ns]

FIG.5

EP 4 325 253 A1

| | Europäisches Patentamt<br>European Patent Office<br>Office européen des brevets | **EUROPEAN SEARCH REPORT** | Application Number<br>**EP 22 19 1121** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BRAGA LEO H C ET AL: "A Fully Digital 8$\,\times\,$16 SiPM Array for PET Applications With Per-Pixel TDCs and Real-Time Energy Output", IEEE JOURNAL OF SOLID-STATE CIRCUITS, IEEE, USA, vol. 49, no. 1, 1 January 2014 (2014-01-01), pages 301-314, XP011534946, ISSN: 0018-9200, DOI: 10.1109/JSSC.2013.2284351 [retrieved on 2013-12-20] * page 302, column 2, lines 8-30; figures 1-8,12,17 * * page 302, column 1, line 15 – page 302, column 2, line 7 * * page 305, column 2, line 26 – page 306, column 1, line 23 * * page 306, column 2, lines 1-21 * * page 312, column 1, lines 8-22 * | 1,2,4-12 | INV.<br>G01T1/17<br>G01T1/20 |
| X | NOLET FRÉDÉRIC ET AL: "A 256 Pixelated SPAD readout ASIC with in-Pixel TDC and embedded digital signal processing for uniformity and skew correction", NUCLEAR INSTRUMENTS & METHODS IN PHYSICS RESEARCH. SECTION A, ELSEVIER BV * NORTH-HOLLAND, NL, vol. 949, 1 October 2019 (2019-10-01), XP085887551, ISSN: 0168-9002, DOI: 10.1016/J.NIMA.2019.162891 [retrieved on 2019-10-01] * page 3, column 2, lines 3-35; figures 1-4 * | 1,3-12 | TECHNICAL FIELDS SEARCHED (IPC)<br>G01T |

The present search report has been drawn up for all claims

| Place of search | Date of completion of the search | Examiner |
|---|---|---|
| The Hague | 18 January 2023 | Van Ouytsel, Krist'l |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)